**Europäisches Patentamt**

**European Patent Office**

**Office européen des brevets**

(19)

(11) Veröffentlichungsnummer: **0 034 353**
**B1**

(12) ## EUROPÄISCHE PATENTSCHRIFT

(45) Veröffentlichungstag der Patentschrift:
01.02.84

(51) Int. Cl.³: **H 01 B 13/02**, G 02 B 5/16

(21) Anmeldenummer: **81101032.1**

(22) Anmeldetag: **13.02.81**

(54) Einrichtung für die SZ-Verseilung von Verseilelementen.

(30) Priorität: **18.02.80 DE 3006054**

(43) Veröffentlichungstag der Anmeldung:
**26.08.81 Patentblatt 81/34**

(45) Bekanntmachung des Hinweises auf die Patenterteilung:
**01.02.84 Patentblatt 84/5**

(84) Benannte Vertragsstaaten:
**AT BE CH DE FR GB IT LI LU NL SE**

(56) Entgegenhaltungen:
**DE - A - 1 640 811**
**DE - A - 2 411 151**
**FR - A - 2 144 393**
**US - A - 2 034 268**
**US - A - 3 172 947**

(73) Patentinhaber: **SIEMENS AKTIENGESELLSCHAFT,**
**Berlin und München Wittelsbacherplatz 2,**
**D-8000 München 2 (DE)**

(72) Erfinder: **Oestreich, Ulrich, Dipl.-Ing.,**
**Karl-Witthalm-Strasse 15, D-8000 München 70 (DE)**

EP 0 034 353 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Einrichtung für die SZ-Verseilung von Verseilelementen

Die Erfindung bezieht sich auf eine Einrichtung für die SZ-Verseilung von n Verseilelementen, insbesondere symmetrischen Elementen (z. B. Vierer) oder Lichtwellenleitern, zu Verseileinheiten, wobei n Speichereinrichtungen vorgesehen sind und die Verseilelemente zu einem gemeinsamen Verseilnippel zusammengeführt werden.

Aus der DE-A1-2 411 151 ist eine Verseilvorrichtung bekannt, bei der zwischen einer Führungsscheibe und einer Lochscheibe ein Rohr mit extrem glatter Oberfläche angeordnet ist. Da hierbei mit wechselnden Verseilrichtungen (SZ-Verseilung) gearbeitet wird, dient das Rohr mit seiner Oberfläche auch als Speichereinrichtung (Rohrspeicher). Bei der bekannten Vorrichtung werden Grundbündel zu Hauptbündeln mittels dieses Rohrspeichers verseilt, wobei die Grundbündel von Vorratsspulen abgezogen werden. Über Art und Durchführung der Verseilung der Grundbündel ist nichts ausgesagt und die Verseilvorrichtung arbeitet somit nur mit einem Rohrspeicher.

Aus der FR-A-2 144 393 ist eine Verseileinrichtung bekannt, bei der nur in einer Verseilrichtung verseilt, also keine SZ-Verseilung angewendet wird. In einer rotierenden Trommel werden jeweils zwei Adern miteinander über rotierende Umlenkscheiben verseilt, wobei das so erhaltene Adernpaar im Inneren von Führungsrohren zu einer zweiten Verseilstelle geführt wird. Dort werden mittels eines rotierenden Rollenpaares die beiden Adern voneinander getrennt und erneut mit besonders kurzer Schlaglänge verseilt. Die verseilten Adernpaare werden im Inneren weiterer Führungsrohre einer zusätzlichen Verseileinrichtung zugeführt.

Aus der DE-A-2 255 419 ist ein Verseilverfahren bekannt, bei dem in einer ersten Verseilstufe Verseilelemente zu Verseileinheiten mit abschnittsweise wechselnder Verdrillungsrichtung verseilt werden, wozu eine entsprechende Speichereinrichtung verwendet wird (SZ-Verseilung). Die so erhaltenen Verseileinheiten werden in einer zweiten Verseilstufe zu einer Verseilgruppe verseilt. Hierzu werden die Verseileinheiten der ersten Verseilstufe einem allen Verseileinheiten gemeinsamen Verseilnippel zugeführt, wobei in unmittelbarer Nähe dieses gemeinsamen Verseilnippels jeweils ein rotierender Verseilkopf angeordnet ist, der die jeweilige Verseileinheit in Umfangsrichtung kraftschlüssig umfaßt. Jeder Verseilkopf übt auf die jeweilige Verseileinheit durch entsprechende Wahl der Drehzahl und der Drehrichtung eine Tordierung in einem solchen Maße aus, daß die Verseileinheiten auf dem Weg zum Verseilnippel eine gleichbleibende Verseilrichtung aufweisen. Damit ist sichergestellt, daß sich die Verseileinheit an den später gebildeten Umkehrstellen der Verteilungseinrichtung auf dem Weg von der ersten Verseilstufe zur zweiten Verseilstufe nicht aufseilen können. Hierzu sind die Verseilköpfe unmittelbar vor dem Verseilnippel angeordnet, um möglichst kurze Wegstrecken zwischen den Verseilköpfen und dem Verseilnippel sicherzustellen. Die Verseilköpfe erzeugen vorläufige und endgültige Verseilungen, die alle infolge der fehlenden Rückdrehung mit entsprechender elastisch-plastischer Torsion verbunden sind. Da die verwendeten Twisteranordnungen lang und die Twister voluminös sind, ist eine Verbindung des Bündelverseilpunktes mit dem letzten Verseilpunkt erschwert.

Der vorliegenden Erfindung liegt die Aufgabe zugrunde, in einfacher Weise eine zwangsläufige Rückdrehung der Adern zu gewährleisten und damit eine mechanische Überbeanspruchung der Verseilelemente zu vermeiden und gleichzeitig bei kurzer und gedrungener Bauweise der Anordnung eine sehr regelmäßige Verseilung mit kurzen Umkehrstellen zu erzeugen, die vor der Verseilung zum Grundbündel nicht mehr gestört werden kann. Derartige Anforderungen treten besonders bei der Verseilung von symmetrischen Elementen und bei der Verseilung von Lichtwellenleitern auf. Dabei soll erreicht werden, daß der Aufbau möglichst einfach gestaltet werden kann. Gemäß der Erfindung, welche sich auf eine Einrichtung der eingangs genannten Art bezieht, wird dies dadurch erreicht, daß als Speichereinrichtungen n sternförmig angeordnete, die Verseilelemente durch Reibung rückdrehende Rohrspeicher vorgesehen sind, an deren Ende jeweils eine die Verseilelemente in axialen Öffnungen führende, mechanisch mit dem Rohrspeicher verbundene Verseilscheibe vorgesehen ist, und daß die Rohrspeicher so aufeinander zulaufend angeordnet sind, daß sie möglichst nahe am Einlauf des Verseilnippels enden, so daß der Verseilpunkt für die Verseilelemente mit dem Verseilpunkt für die Verseileinheit nahezu zusammenfällt.

Weiterbildungen der Erfindung sind in den Unteransprüchen wiedergegeben.

Die Erfindung wird nachfolgend anhand eines Ausführungsbeispieles näher erläutert. Es zeigt

Fig. 1 in schematischer Darstellung den Grundaufbau einer erfindungsgemäßen Einrichtung,

Fig. 2 Einzelheiten der erfindungsgemäßen Einrichtung und

Fig. 3 eine Ansicht in Richtung auf die Einlauföffnung des Verseilnippels.

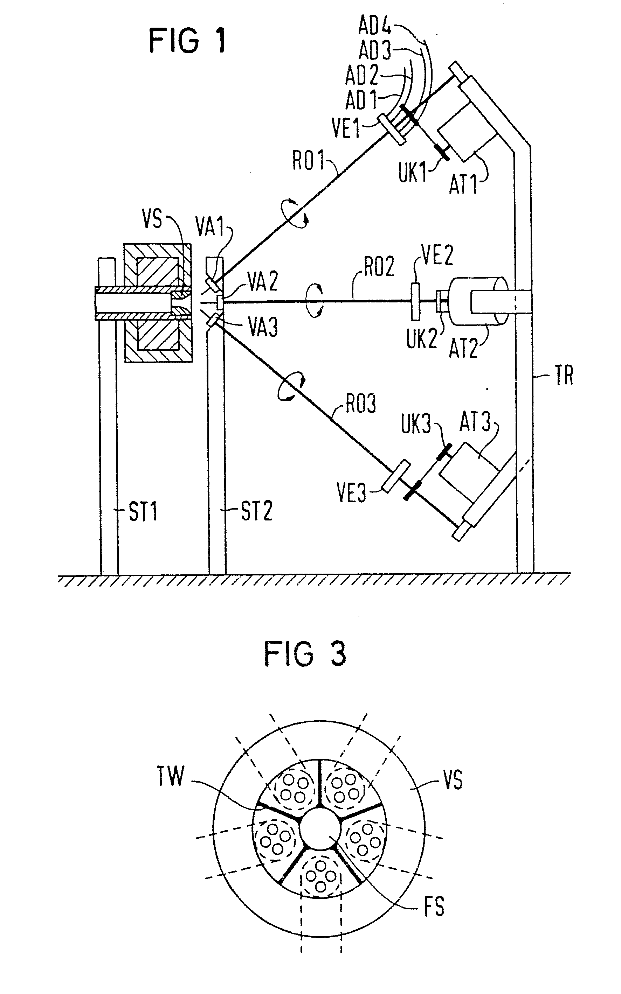

In Fig. 1 ist ein Trägerrahmen TR dargestellt, auf dem zur Verseilung von fünf Sternvierern fünf Antriebseinrichtungen AT1 bis AT5 vorgesehen sind (die vierte und fünfte Antriebsvorrichtung ist zur Vereinfachung der Darstellung weggelassen). Es handelt sich bei den Antriebseinrichtungen um Einzelmotoren, die mit einer entsprechenden Umschaltkupplung UK1, UK2, UK3 (UK4 und UK5 sind weggelassen), versehen sind. Von diesen Umschaltkupplungen aus werden z. B. über Zahnriemen zylindrische Speicher angetrieben, die hier in Form von Rohrspeichern RO1, RO2, RO3 (RO4 und RO5 weggelassen) ausgebildet sind. Bei einer Abzugsgeschwindigkeit von 200 m/min 10 cm Schlaglänge und maximal 5 Schlägen im Speicher (d. h. 10 Schlägen zwischen zwei Umkehrstellen) müssen die Umschaltkupplungen jeweils z. B. 200mal in der Minute die Rohrspeicher RO1 bis RO5 von −2000 U/min auf +2000 U/min reversieren. Für den Reversiervorgang stehen somit höchstens 10 ms zur Verfügung. Da das Trägheitsmoment des so gebildeten Speichers jeweils nur durch das Zahnrad, den Zahnriemen, den Rohrspeicher und die Verseilscheiben bestimmt wird, sind entsprechend schnell auf aufeinander folgende Reversiervorgänge möglich.

Die Gesamtlänge der in F i g. 1 dargestellten Anordnung kann etwa 0,7 m betragen, wobei die Rohrspeicher RO1 bis RO5 jeweils ca. 0,5 m lang sind und Rohrdurchmesser von etwa 0,5 cm ausreichen.

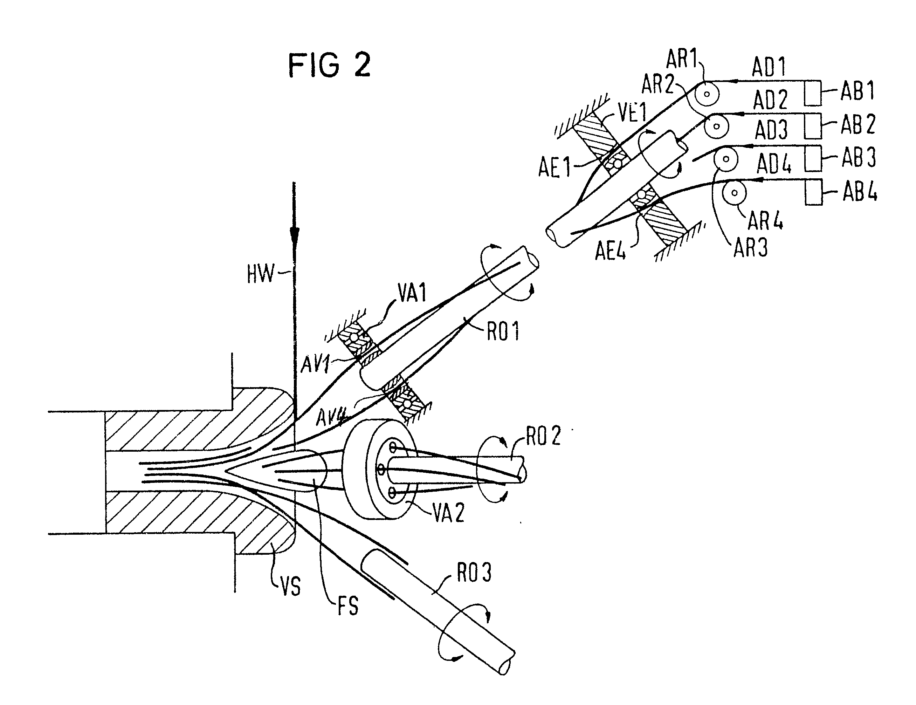

Auf den Rohrspeichern RO1 bis RO5 ist jeweils am Einlauf eine Verseilscheibe VE1 bis VE5 angebracht, der eine entsprechende Anzahl von nur schematisch dargestellten Einzeladern AD1 bis AD4 (bei VE1) zugeführt wird, je nachdem, welche Art von Verseileinheit gebildet werden soll. Im vorliegenden Beispiel ist angenommen, daß auf jedem der Rohrspeicher RO1 bis RO5 ein Sternvierer hergestellt werden soll. Die am Einlauf vorgesehenen Lochscheiben weisen Öffnungen auf, durch welche die Einzeladern AD1 bis AD4 in Richtung auf die Oberfläche der Rohrspeicher RO1 bis RO5 zugeführt werden. Nähere Einzelheiten hierzu sind in Fig. 2 dargestellt. Die Rohrspeicher RO1 bis RO5 sind ausgangsseitig mit Verseilscheiben VA1 bis VA5 versehen, welche endseitig fest mit den jeweiligen Rohrspeichern verbunden sind. Über diese Verseilscheiben und die Rohrspeicher RO1 bis RO5 werden die SZ-verseilten Verseilelemente in Form von fünf selbständigen Vierer-Verseileinheiten einem gemeinsamen Verseilnippel VS zugeführt, dessen Öffnung so gewählt ist, daß die durch die fünf Verseileinheiten gebildete Verseilgruppe fest zusammengehalten wird. Dieser Verseilnippel VS ist außerhalb der Rohrspeichergestelle ST2 durch ein Gestell ST1 gehalten und unterscheidet sich von einem normalen Verseilnippel dadurch, daß in ihm gleichzeitig die Verseilung der Adern zu den Vierern (Verseileinheiten), der Vierer zum Grundbündel (Verseilgruppe) und die Fixierung des Grundbündels durch eine Haltewendel stattfindet. Um dies zu erleichtern, kann vor dem gemeinsamen Verseilnippel VS ein rotationssymmetrischer Führungskegel FS angeordnet werden, der von der Rohrspeicherseite her gehalten und so ausgebildet ist, daß er die Bildung eines Viererverseilpunktes kurz vor dem Bündelverseilpunkt ermöglicht. Dieser in Fig. 2 und 3 näher dargestellte Kegel kann durch auslaufende Trennwände TW zum Stern ausgebildet werden und schließlich auch mit dem Nippel so vereinigt werden, daß fünf runde Einzelnippel und der anschließende gemeinsame Nippel eine Einheit bilden. In diesem Falle entfällt das gleichzeitige Aufbringen der Haltewendel. Dies ist z. B. dann von Interesse, wenn das Grundbündel (Verseilgruppe) ebenfalls SZverseilt werden soll. Es wird zwar meist eine Gleichschlagverseilung angewendet, doch ist dies nicht zwingend.

Durch den dargestellten Aufbau der Verseileinrichtung läßt sich eine sehr schlanke Bauweise der Speicheranordnung erzielen, die am Verseilende nur durch die radialen Abmessungen der jeweiligen Verseilscheiben VA1 bis VA5 begrenzt wird. Es ist zweckmäßig, diese Verseilscheiben VA1 bis VA5 möglichst nahe vor dem Eingang des gemeinsamen Verseilnippels VS anzuordnen, wobei die einzelnen Verseilscheiben VA1 bis VA5 im wesentlichen etwa auf einer Kugelkalotte liegen. Sie können räumlich möglichst nahe zueinander angeordnet werden, d. h. so, daß sie mit ihren außenliegenden, durch zwischengeschaltete Kugellager sich nicht bewegenden Lagerringen fast aneinander stoßen.

Am Ausgang des gemeinsamen Verseilnippels VS kann irgendeine der bekannten weiteren Verseileinrichtungen vorgesehen sein und es sind alle Verseilarten möglich beispielsweise Gleichschlagverseilung, SZ-Verseilung in Bündel- oder Lagenform.

Bei der Darstellung nach F i g. 2 sind die zu verseilenden Adern AD1 bis AD4 auf entsprechenden Ablaufeinrichtungen (Trommeln) AB1 bis AB4 angeordnet. Sie laufen jeweils über eine oder mehrere Abzugs- bzw. Umlenkrollen AR1 bis AR4 und gelangen zu den eingangsseitigen Verseilscheiben VE1 bis VE4. Die Verseilscheiben sind mit jeweils vier axialen Öffnungen AE1 bis AE4 versehen, wobei diese axialen Öffnungen feststehend angeordnet sind. Hierzu ist z. B. an der Innenseite der Verseilseite VE1 ein Kugellager vorgesehen, dessen Innenring fest mit dem Rohrspeicher RO1 verbunden ist. Der Aufbau bei den übrigen Rohrspeichern RO2 bis RO5 ist analog zum Rohrspeicher RO1.

Je nach Abzugsgeschwindigkeit und Frequenz der Reversionsfolge des Rohrspeichers RO1 werden hinter diesem Rohrspeicher die einzelnen Adern AD1 bis AD4 in einer SZ-Anordnung miteinander verseilt. Ausgangsseitig ist die Verseilscheibe VA1 vorgesehen, die ebenfalls vier axiale Bohrungen AV1 bis AV4 aufweist, wobei jedoch diese Bohrungen in einem Teil der Verseilscheibe VA1 liegen, der fest mit dem Rohrspeicher RO1 verbunden ist. Dadurch machen die darin geführten Adern AR1 bis AR4 die Reversionsvorgänge des Rohrspeichers RO1 mit. Am Außenrand der Verseilscheibe VA1 ist ein Kugellager vorgesehen, dessen Außenring sich fest in einem Halterahmen oder dergleichen abstützt. Dieser Halterahmen bildet z. B. eine etwa eine Kugelkalotte ergebende Konfiguration, in der die einzelnen Verseilscheiben VA1 bis VA5 möglichst nahe benachbart und damit möglichst nahe zu den Einlauföffnungen des Verseilnippels VS liegen. Diese Einlauföffnung ist etwa konisch geformt mit einem Öffnungswinkel, welcher der Schrägstellung der verschiedenen Rohrspeicher RO1 bis RO5 entspricht. Die Speichereinrichtungen sind somit räumlich sternförmig angeordnet und der Verseilpunkt für die Verseilelemente und der für die Verseileinheit (Bündel) fallen zusammen.

Unmittelbar vor dem Eingang des Verseilnippels VS kann zweckmäßig eine Haltewendel HW in hier nicht näher dargestellter Weise auf die Verseilgruppe aufgebracht werden und zwar zweckmäßig durch einen Zentralspinner.

Die Haltewendel HW wird von einem konzentrisch aufgehängten Kops abgezogen und in üblicher Weise auf die Verseilgruppe aufgesponnen.

Bei nicht ausreichend stabilen Verseilgruppen, z. B. bei solchen, die aus fünf Verseileinheiten zusammengefaßt werden, kann es zweckmäßig sein, eine in den Nippel hineinragende Führungsspitze FS vorzusehen, welche für ein Höchstmaß an Symmetrie sorgt. Diese Führungsspitze ist in etwa in ihrer Außenkontur parallel zu dem Einlaufkonus des Verseilnippels VS gestaltet und liegt koaxial zur Längsachse der Öffnung des Verseilnippels, wobei dort die Adern nur teilweise dargestellt sind.

Die dargestellte Maschine (bis zum Verseilnippel) kann weniger als einen Meter lang und weniger als 1,5 m breit gehalten werden, was in den Abmessungen gut zu nachfolgenden, hier nicht dargestellten Verseilmaschinen paßt.

Die Erfindung erlaubt die Verarbeitung vor allem auch von besonders empfindlichen Verseilelementen, z. B. Koaxialkabeln oder Lichtwellenleitern. Ebenso lassen sich papierisolierte Leiter verseilen, weil sich viel geringere Beanspruchungen von Isolierung und Leiter ergeben. Den geringen Umkehrstellenabständen stehen sehr kurze Umkehrstellen gegenüber, die außerdem ihren Abstand noch proportional zur Schlaglänge ändern.

**Patentansprüche**

1. Einrichtung für die SZ-Verseilung von n Verseilelementen, insbesondere symmetrischen Elementen (z. B. Vierer) oder Lichtwellenleitern, zur Verseileinheiten, wobei n Speichereinrichtungen vorgesehen sind und die Verseilelemente zu einem gemeinsamen Verseilnippel (VS) zusammengeführt werden, dadurch gekennzeichnet, daß als Speichereinrichtungen n sternförmig angeordnete, die Verseilelemente durch Reibung rückdrehende Rohrspeicher (RO1 bis RO3) vorgesehen sind, an deren Ende jeweils eine die Verseilelemente in axialen Öffnungen (AV1 bis AV4) führende, mechanisch mit dem Rohrspeicher verbundene Verseilscheibe (VA1 bis VA3) vorgesehen ist, und daß die Rohrspeicher (RO1 bis RO3) so aufeinander zulaufend angeordnet sind, daß sie möglichst nahe am Einlauf des Verseilnippels (VS) enden, so daß der Verseilpunkt für die Verseilelemente mit dem Verseilpunkt für die Verseileinheit (Bündel) nahezu zusammenfällt.

2. Einrichtung nach Anspruch 1, dadurch gekennzeichnet, daß der gemeinsame Verseilnippel (VS) außerdem zum Aufbringen einer Haltewendel (HW) durch einen Zentralspinner benutzt wird.

3. Einrichtung nach einem der vorhergehenden Ansprüche, dadurch gekennzeichnet, daß vor dem Verseilnippel (VS) eine Führungsspitze (FS) vorgesehen ist, die die Verseilpunkte der Verseilelemente etwas vor den Verseilpunkt der Verseilgruppe legt.

4. Einrichtung nach Anspruch 3, dadurch gekennzeichnet, daß die Führungsspitze (FS) koaxial zur Öffnung des Verseilnippels (VS) verläuft und in ihrer Außenkontur parallel zum Einlaufkonus des Verseilnippels (VS) gestaltet ist.

5. Einrichtung nach einem der Ansprüche 3 oder 4, dadurch gekennzeichnet, daß die Führungsspitze (FS) sternförmig abgehende Trennwände (TW) für die Führung der Verseilelemente trägt.

6. Einrichtung nach einem der vorhergehenden Ansprüche, dadurch gekennzeichnet, daß der Verseilnippel (VS) auf der Einlaufseite durch Einzelführungen (Bohrungen) für die Verseilelemente abgeschlossen ist.

**Claims**

1. Apparatus for the SZ-stranding of n stranding elements, in particular symmetrical elements (e. g. four), or light waveguides, to form strandes units, where n storage devices are provided and the stranding elements are led together to a common stranding nipple (VS), characterised in that the storage devices consist of n tubular magazines (RO1 to RO3) which are arranged in star formation and untwist the strand elements by friction and at the end of which there are arranged stranding discs (VA1 to VA3) which guide the stranding elements in axial openings (AV1 to AV4) and are mechanically connected to the tubular magazines; and that the tubular magazines (RO1 to RO3) are arranged to approach one another in such a way that they terminate as near as possible to the inlet point of the strand nipple (VS) so that the stranding point for the strand elements approximately coincides with the stranding point for the strand unit (bundle).

2. Apparatus according to Claim 1, characterised in that the common stranding nipple (VS) is also used for the application of a supporting winding (HW) by a central spinner.

3. Apparatus according to one of the preceding Claims, characterised in that the stranding nipple (VS) is preceded by a guide tip (FS) which places the stranding points of the strand elements somewhat in front of stranding point of the strand group.

4. Apparatus according to Claim 3, characterised in that the guide tip (FS) runs coaxially with the opening of the strand nipple (VS) and its outer contour runs parallel to the inlet cone of the strand nipple (VS).

5. Apparatus according to one of Claims 3 or 4, characterised in that the guide tip (FS) supports partition walls (TW), which are directed outwardly in star formation, for the guidance of the strand elements.

6. Apparatus according to one of the preceding Claims characterised in that the strand nipple (VS) terminates on the inlet side in individual guides (bores) for the strand elements.

**Revendications**

1. Dispositif pour réaliser le câblage SZ de n éléments de câblage, notamment d'éléments symétriques (par exemple de quartes) ou de guides d'ondes de lumière, pour former des unités de câblage, n dispositifs accumulateurs étant prévus et les éléments de câblage étant réunis au niveau d'une filière commune de câblage (VS), caractérisé par le fait qu'il est prévu comme dispositifs accumulateurs, n accumulateurs tubulaires (RO1 à RO3) disposés en étoile et réalisant une détorsion des éléments de câblage par frottement et aux extrémités desquels sont prévues des plaques respectives de répartition (VA1 à VA3) guidant les éléments de câblage dans des ouvertures axiales (AV1 à AV4) et reliées mécaniquement aux accumulateurs tubulaires, et que les accumulateurs

tubulaires (RO1 à RO3) sont disposés de manière à converger les uns vers les autres de telle sorte qu'ils se terminent aussi près que possible au niveau de l'entrée de la filière de câblage (VS) de sorte que le point de câblage pour les éléments de câblage coincide approximativement avec le point de câblage pour l'unité de câblage (faisceau).

2. Dispositif suivant la revendication 1, caractérisé par le fait que la filière commune de câblage (VS) est utilisée en outre pour l'application d'une bande de frettage (HW) au moyen d'une tête centrale de câblage.

3. Dispositif suivant l'une des revendications précédentes, caractérisé par le fait qu'en amont de la filière de câblage (VS) est prévue une pointe de guidage (FS), qui règle les points de câblage des éléments de câblage légèrement en amont du point de câblage du groupe de câblage.

4. Dispositif suivant la revendication 3, caractérisé par le fait que la pointe de guidage (FS) est coaxiale à l'ouverture de la filière de câblage (VS) et que son contour extérieur est agencé de manière à être parallèle au cône d'entrée de cette filière.

5. Dispositif suivant l'une des revendications 3 ou 4, caractérisé par le fait que la pointe de guidage (FS) porte des parois de séparation (CW) s'écartant en étoile eet servant au guidage des éléments de câblage.

6. Dispositif suivant l'une des revendications précédentes, caractérisé par le fait que la filière de câblage (VS) est fermée, sur le côté entrée, par des guides individuels (perçages) pour les éléments de câblage.

# FIG 1

# FIG 3

# FIG 2

0 034 353